## Europäisches Patentamt
## European Patent Office
## Office européen des brevets

(11) Veröffentlichungsnummer: **0 273 243**
**A2**

(12) **EUROPÄISCHE PATENTANMELDUNG**

(21) Anmeldenummer: 87118115.2

(22) Anmeldetag: 08.12.87

(51) Int. Cl.⁴ **C08G 18/42 , C08G 63/52**

(30) Priorität: 20.12.86 DE 3643788

(43) Veröffentlichungstag der Anmeldung:
06.07.88 Patentblatt 88/27

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Beck, Manfred, Dr.**
**Weberstrasse 11a**
**D-5272 Wipperfürth(DE)**
Erfinder: **Hombach, Rudolf, Dr.**
**Johann-Janssen-Strasse 24**
**D-5090 Leverkusen 1(DE)**
Erfinder: **Meckel, Walter, Dr.**
**Zonser Strasse 9**
**D-4040 Neuss(DE)**

(54) **Amino- und Amidgruppen enthaltende Polyesterpolyole und daraus hergestellte Poly(harnstoff)urethane.**

(57) Verfahren zur Herstellung von Amid-und Aminogruppen enthaltenden Polyesterpolyolen durch Umsetzung von Polyesterpolyolen mit niedermolekularen, vorzugsweise aliphatischen Polyaminen mit zwei primären Aminogruppen und den Einsatz der so hergestellten Amino-und Amidgruppen enthaltenden Polyesterpolyole zur Herstellung von Poly(harnstoff)urethanen, die sich besonders als Klebstoffe eignen.

EP 0 273 243 A2

## Amino-und Amidgruppen enthaltende Polyesterpolyole und daraus hergestellte Poly(harnstoff)-urethane

Die vorliegende Erfindung betrifft Verfahren zur Herstellung von Amid-und Aminogruppen enthaltenden Polyesterpolyolen durch Umsetzung von Polyesterpolyolen mit niedermolekularen, vorzugsweise aliphatischen Polyaminen mit zwei primären Aminogruppen und den Einsatz de so hergestellten Amino-und Amidgruppen enthaltenden Polyesterpolyole zur Herstellung von Poly(harnstoff)urethanen, die sich besonders als Klebstoffe eignen.

Polyesterpolyole werden zur Herstellung von Polyurethanen durch Umsetzung mit Polyisocyanaten verwendet. Dabei hat es nicht an Versuchen gefehlt, diese Umsetzungsreaktion zu beschleunigen, wobei auch eine Vielzahl von Katalysatoren zum Einsatz kamen Katalysatoren, wie z.B. Zinnverbindungen haben aber den Nachteil, daß· bei höhren Temperaturen auch die Rückreaktion katalysiert wird. Auch die Mitverwendung von niedermolekularen Polyaminen als Kettenverlängerer führte nicht immer zu der gewünschten schnellen Umsetzung, die beim Einsatz des genannten 2-Komponentensystems zur Herstellung von Klebstoffen auf PU-Basis notwendig ist.

Es bestand daher ein Bedürfnis, eine höhermolekulare Polyesterpolyolkomponente für die Herstellung von Polyurethanen zur Verfügung zu stellen, die nicht nur eine ausgezeichnete Reaktivität mit Polyisocyanaten, sondern auch eine ausreichende Mischbarkeit mit Polyetherpolyolen vorzugsweise verzweigten Polyetherpolyolen aufweist, wovon die Eignung als Klebstoffkomponente entscheidend abhängen kann. Außerdem sollte der Einsatz niedermolekularer Diamine am Anwendungs-und damit Herstellungsort de Polyurethanklebstoffe wegen möglicher Geruchsbelästigung weitgehend vermieden werden.

Erfindungsgemäß gelingt dies, indem man die Polyesterpolyolkomponente nach dem erfindungsgemäßen Verfahren modifiziert und die modifizierte Komponente zur Polyurethanherstellung verwendet.

Ein Gegenstand der vorliegenden Erfindung sind daher Verfahren zur Herstellung von Amino-und Amidgruppen enthaltenden Polyesterpolyolen durch Umsetzung von Polyesterpolyolen mit Polyaminen, die dadurch gekennzeichnet sind, daß man ils Polyesterpolyole ungesättigte Polyesterpolyole gegebenenfalls in Abmischung mit gesättigten Polyesterpolyolen und als Polyamine niedermolekula re, aliphatische Polyamine mit zwei primären Aminogruppen einsetzt.

Aus der US-PS 37 15 335 ist zwar schon bekannt, ungesättigte Polyester mit Diaminen, die eine primäre und eine tertiäre Aminogruppe aufweisen, umzusetzen, gegebenenfalls diese Umsetzungsprodukte weiterhin mit Diaminen mit zwei primären Aminogruppen reagieren zu lassen und die Verfahrensprodukte an den tertiären Stickstoffatomen mit Epichlorhydrin zu quaternieren. Diese Endprodukte werden als Additive zur Papierherstellung und als Flockungshilfsmittel empfohlen. Daraus konnte der Fachmann aber keineswegs schließen, daß sich Polyesterpolyole, die ausschließlich mit Polyaminen, vorzugsweise Diaminen, mit zwei primären Aminogruppen modifiziert wurden, hervorragend zur Herstellung von Klebstoffen auf Polyharnstoffpolyurethanbasis eignen.

Ein weiterer Gegenstand der vorliegenden Erfindung sind daher auch Verfahren zur Herstellung von Polyharnstoffpolyurethanen, insbesondere Klebstoffen auf Basis von Polyurethanen, durch Umsetzung von höhermolekularen Polyesterpolyolen mit Polyisocyanaten und gegebenenfalls weiteren üblichen Hilfs-und Zusatzstoffen, die dadurch gekennzeichnet sind, daß man als Polyesterpolyole Amino-und Amidgruppen enthaltende Polyesterpolyole einsetzt, die durch Umsetzung von ungesättigten Polyesterpolyolen, gegebenenfalls in Abmischung mit gesättigten Polyesterpolyolen mit niedermolekularen aliphatischen Polyaminen mit zwei primären Aminogruppen hergestellt worden sind.

Für die Herstellung der modifizierten Polyesterpolyole werden die bekannten höhermolekularen ungesättigten Polyesterpolyole verwendet. Vorzugsweise sind dies ungesättigte Polyesterpolyole, mit einem Molekulargewicht von 400-10 000 und einer OH-Zahl von 10-500, die man durch Umsetzung von mehrwertigen, vorzugsweise zweiwertigen $\alpha,\beta$-ungesättigten Carbonsäuren und/oder deren Anhydriden mit Polyolverbindungen erhält. Dabei werden vorzugsweise als ungesättigte Polycarbonsäuren, Maleinsäure, Fumarsäure, Mesaconsäure Zitraconsäure und/oder dimerisierte und trimerisierte ungesättigte Fettsäuren eingesetzt. Maleinsäureanhydrid wird besonders bevorzugt verwendet. Neben den $\alpha,\beta$-ungesättigten Polycarbonsäuren können die ungesättigten Ester auch noch aus gesättigten aliphatischen Polycarbonsäuren mit $C_4$ bis $C_{10}$ oder aromatischen Polyolcarbonsäuren mit $C_8$ bis $C_{16}$ aufgebaut sein. Als Polyolkomponenten zum Aufbau der ungesättigten Polyester werden vorzugsweise lineare oder verzweigte, gesättigte oder ungesättigte $C_2$ bis $C_6$ Polyole, vorzugsweise Diole bzw. davon abgeleitete Mono-oder Dietherdiole eingesetzt.

Als mehrwertige Alkohole kommen Ethylenglykol, Propylenglykol-1,2 und -1,3, Butylenglykol-1,4 und

-2,3, Hexandiol-1,6, Octandiol-1,8, Neopentylglykol-1,4-bis-hydroxymethylcyclohexan, 2-Methyl-1,3-propandiol und in untergeordneten Mengen höher funktionelle Polyole wie Glycerin, Trimethylolpropan, Hexantriol-1,2,6, Butantriol-1,2,4, Trimethylolethan, Pentaerythrit, Chinit, Mannit, Sorbit, Formit, Methyglykosid ferner Diethylenglykol, Triethylenglykol, Tetraethylenglykol und Polyethylenglykole, Dipropylenglykol und Polypropylenglykole sowie Dibutylenglykol und Polybutylenglykole in Frage. Besonders bevorzugt ist der Einsatz von Ethylenglykol, Diethylenglykol, 1,2-Propandiol, Dipropylenglykol und Neopentylglykol.

Die genannten Polyolkomponenten können auch zur Herstellung der gesättigten Polyesterpolyole verwendet werden, die bis zu 80 Gew.-%, bezogen auf die gesamte Polyesterpolyolkomponente, vorzugsweise bis 50 Gew.-%, mit den ungesättigten Polyesterpolyolen eingesetzt werden können. Vorzugsweise werden als gesättigte Polycarbonsäuren bzw. den entsprechenden Anhydriden solche mit 4 bis 14 C-Atomen eingesetzt, wobei die Polycarbonsäuren lineare oder verzweigte, aliphatische, cycloaliphatische oder aromatische Dicarbonsäuren sein können, wie z.B.

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Phthalsäuredimethylester und Terephthalsäure-bis-glykolester.

Zur Umsetzung mit den Polyesterpolyolen werden niedermolekulare Polyamine, vorzugsweise Diamine, verwendet, die zwei primäre Aminogruppen aufweisen. Insbesondere sind dies aliphatische Diamine mit 2 bis 6 C-Atomen. Vorzugweise werden Amine der allgemeinen Formel $NH_2$-R-$NH_2$ eingesetzt, in der R für eine aliphatischen oder cycloaliphatischen Rest mit $C_2$-$C_6$ oder eine -$R^1$-NH-$R^1$-oder -$R^1$-$(NH-R^1)_n$-Gruppe steht, wobei $R^1$ die Bedeutung eines Ethylen-oder 1,2-Propylenradikals hat und n für eine ganze Zahl von 1 bis 3 steht. Bevorzugt sind Alkylendiamine, insbesondere Ethylen-und Hexamethylendiamin.

Die Reaktion der Polyesterpolyole mit der Aminkomponente kann in Lösung oder in Substanz erfolgen. Als Lösungsmittel können Ketone, Alkohole, Chlorkohlenwasserstoffe, Ether oder Ester verwendet werden. Bevorzugt sind leicht flüchtige Lösungsmittel wie Methylethylketon oder Dioxan. Besonders bevorzugt wird die Reaktion in Substanz durchgeführt. Hierzu wird die Polyesterpolyolkomponente in dem Reaktionsgefäß vorgelegt, gegebenenfalls aufgeschmolzen und dann das Amin zugetropft. Die Reaktion wird vorzugsweise bei Temperaturen von 0°C bis 150°C, besonders bevorzugt von 10°C bis 100°C durchgeführt. Im Anschluß an die Reaktion entfernt man evtl. noch vorhandenes Amin durch Erwärmen im Vakuum, um so die modifizierte Polyesterpolyolkomponente zu isolieren.

Die erfindungsgemäß modifizierten Polyesterpolyolkomponenten sind je nach Wahl der Ausgangskomponenten viskose bis feste Substanzen. Sie können durch ihre OH-Zahl, den Gesamtstickstoffgehalt sowie ihren basischen Stickstoff charakterisiert werden. Besonders geeignete modifizierte Polyesterpolyole sind solche, deren OH-Zahl zwischen 50 bis 500, bevorzugt zwischen 150 bis 350 liegt und die einen Gesamtstickstoff von 1 bis 7 Gew.-%, bevorzugt 2 bis 5,5 Gew.-% aufweisen, wobei das Verhältnis von basischem Stickstoff zu Gesamtstickstoff bei 1:1 bis 1:6, bevorzugt bei 1:2 bis 1:5 liegen sollte. Um eine aus reichend rasche Reaktion mit den Polyisocyanaten beim Einsatz der erfindungsgemäßen Polyesterpolyole zur Herstellung von Klebstoffen auf PU-Basis zu erreichen, sollten die Polyesterpolyole einen Gehalt an basischem Stickstoff von 0,5 bis 2,5 Gew.-% aufweisen. Werden als Ausgangskomponenten nur ungesättigte Polyesterpolyole eingesetzt, so erhält man im allgemeinen feste Reaktionsprodukte, die mit flüssigen, gesättigten, unmodifizierten Polyesterpolyolen mischbar sind und so verdünnt werden können. Werden Mischungen von ungesättigten und gesättigten Polyesterpolyolen modifiziert, so sollte das Gewichtsverhältnis zwischen 1:0 bis 1:10, bevorzugt 1:3 bis 1:7 liegen. Zur Modifizierung sollte bevorzugt ein Gewichtsverhältnis von Polyamin zu Polyesterpolyol von 0,5:100 bis 30:100 eingehalten werden. Bevorzugt ist ein Gewichtsverhältnis von 4:100 bis 15:100.

Die erfindungsgemäß modifizierten Polyesterpolyole, insbesondere die Produkte, die man aus Mischungen von ungesättigten und gesättigten Polyesterpolyolen hergestellt hat, zeichnen sich außerdem noch durch eine verbesserte Mischbarkeit mit insbesondere verzweigten Polyetherpolyolen wie z.B. Polypropylenglykolen, mit vorzugsweise einer OH-Zahl von 200 bis 400 aus, wodurch nicht nur die Viskosität der modifizierten Polyesterpolyole für ihren Einsatz als Klebstoffkomponente je nach Anwendung variiert, sondern auch ihre Reaktivität gegenüber Polyisocyanaten eingestellt werden kann.

Ein weiterer Gegenstand der Erfindung sind außerdem Verfahren zur Herstellung von Poly(harnstoff)-polyurethanen durch Umsetzung von Polyesterpolyolen mit Polyisocyanaten, sowie gegebenenfalls weiteren höhermolekularen Verbindungen (Molekulargewicht 400 bis 10 000) mit gegenüber Isocyanaten reaktiven Gruppen und gegebenenfalls niedermolekularen Polyolen als Kettenverlängerungsmittel, gegebenenfalls in Anwesenheit von Katalysatoren und weiteren Zusatzstoffen in an sich bekannter Weise, die dadurch gekennzeichnet sind, daß man als Polyesterpolyolkomponente zu mindestens 20 Gew.-%, vorzugsweise zu mindestens 50 %, die erfindungsgemäß modifizierten Amino-und Amidogruppen aufweisenden Polyesterpolyole verwendet.

3

Als Isocyanatkomponente können hierfür aliphatische, cycloaliphatische, araliphatische, aromatische und heterocyclische Polyisocyanate verwendet werden, wie sie z.B. von W. Siefken in Justus Liebigs Annalen der Chemie, 562, Seiten 75 bis 136, beschrieben werden, beispielsweise Ethylen-diisocyanat, 1,4-Tetramethylendiisocyanat, 1,6-Hexamethylendiisocyanat, 1,12-Dodecandiisocyanat, Cyclobutan-1,3-diisocyanat-Cyclohexan-1,3-und -1,4-diisocyanat sowie beliebige Gemische dieser Isomeren, 1-Isocyanato-3,3,5-trimethyl-5-isocyanatomethyl-cyclohexan (DAS 1 202 785), amerikanische Patentschrift 3 401 190), 2,4-und 2,6-hexahydrotoluylendiisocyanat sowie beliebige Gemische dieser Isomeren, Hexahydro-1,3-und/oder -1,4-phenylen-diisocyanat, Perhydro-2,4'-und/oder -4,4'.diphenylmethan-diisocyanat, 1,3-und 1,4-Phenylendiisocyanat, 2,4-und 2,6-Toluylendiisocyanat sowie beliebige Gemische dieser Isomeren, Diphenylmethan-2,4'-und/oder -4,4'-diisocyanat, Naphthylen-1,5-diisocyanat, Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, m-und p-Isocyanatophenyl-sulfonyl-isocyanate gemäß der amerikanischen Patentschrift 3 454 606, perchlorierte Arylpolyisocyanate, wie sie z.B. in der deutschen Auslegeschrift 1 157 601 (amerikanische Patentschrift 3 277 138) beschrieben werden, Carbodiimidgruppen aufweisende Polyisocyanate, wie sie in der deutschen Patentschrift 1 092 007 (amerikanische Patentschrift 3 152 162) beschrieben werden, Diisocyanate, wie sie in der amerikanischen Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanatgruppen aufweisende Polyisocyanate, wie sie z.B. in der amerikanischen Patentschrift 3 001 973, in den deutschen Patentschriften 1 002 789, 1 222 067 und 1 027 394 sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394 (amerikanische Patentschriften 3 124 605 und 3 201 372) sowie in der britischen Patentschrift 889 050 beschrieben werden, durch Telomerisationsreaktionen hergestellte Polyisocyanate, wie sie z.B. in der amerikanischen Patentschrift 3 654 106 beshrieben werden, Ester gruppen aufweisende Polyisocyanate, wie sie z.B. in den britischen Patentschriften 965 474 und 1 072 956, in der amerikanischen Patentschrift 3 567 763 und in der deutschen Patentschrift 1 231 688 bekannt werden, Umsetzungsprodukte der obengenannten Isocyanate mit Acetalen gemäß der deutschen Patentschrift 1 072 385 sowie polymere Fettsäurereste enthaltende Polyisocyanate gemäß der amerikanischen Patentschrift 3 455 883.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4-und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"). Besonders bevorzugt sind flüssige Polyisocyanate wie 4,4'-Diisocyanatodiphenylmethan bzw. die technischen Gemische, 2,4-Diisocyanatotoluol bzw. die technischen Gemische, Hexamethylendiisocyanat oder Isophorondiisocyanat.

Erfindungsgemäß gegebenenfalls mitzuverwendende Ausgangskomponenten mit mindestens zwei gegenüber Isocyanaten reaktionsfähigen Wasserstoffatomen von einem Molekulargewicht in der Regel von 400 bis 40 000 sind neben Aminogruppen oder Carboxylgruppen aufweisenden Verbindungen vorzugsweise weitere Polyhydroxylverbindungen, insbesondere 2 bis 8 Hydroxylgruppen aufweisende Verbindungen, speziell solche vom Molekulargewicht 800 bis 40 000, vorzugsweise 1000 bis 8000, z.B. mindestens zwei, in der Regel 2 bis 8, vorzugsweise aber 2 bis 4, Hydroxylgruppen aufweisende Polyester oder Polyether, wie sie für die Herstellung von homogenen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Äthylenglykol, Propylenglykol-(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Vorzugsweise werden die Polyesterpolyole mitverwendet, die auch zur Herstellung der modifizierten Polyesterpolyole verwendet werden.

Als Polyetherpolyole neben Oligoethylenglykolen und Oligopropylenglykolen mindestens 2, in der Regel 2 bis 8, vorzugsweise 2 bis 3, Hydroxylgruppen aufweisende Polyether eingesetzt werden, wie sie nach an sich bekannten Verfahrensweisen z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von BF₃, oder durch Anlagerung dieser Epoxide, gegebenenfalls im Gemisch oder nacheinander, an Startkomponenten mit reaktionsfähigen Wasserstoffatomen wie Wasser, Alkohole oder Amine, z.B. Ethylenglykol, Propylenglykol-(1,3) oder -(1,2), Trimethylolpropan, 4,4'-Dihydroxydiphenylpropan, Anilin, Ammoniak, Ethanolamin oder Ethylendiamin hergestellt werden. Auch Sucrosepolyether, wie sie z.B. in den deutschen Auslegeschriften 1 176 358 und 1 064 938 beschrieben werden, kommen in Frage. Vorzugsweise werden verzweigte Polyetherpolyole wie Polypropylenglykol mitverwendet.

Auch die erfindungsgemäß gegebenenfalls mitzuverwendenden OH-gruppenhaltigen Kettenverlängerungsmittel vom Molekulargewicht 32 bis 400 sind solche der an sich bekannten Art. Sie enthalten ebenfalls mindestens 2, vorzugsweise 2 oder 3, gegenüber Isocyanaten reaktive Gruppen, Als Beispiele für derartige Verbindungen seien genannt: Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bishydroxymethyl-cyclohexan, 2-Methyl-1,3-propandiol, Glycerin, Trimethylolpropan, Hexantriol-(1,2,6), Trimethylolethan, Pentaerythrit, Chinit, Mannit und Sorbit, Diethylenglykol, Triethylenglykol, Tetraethylenglykol, Polyethylenglykole mit einem Molekulargewicht bis 400, Dipropylenglykol, Polypropylenglykole mit einem Molekulargewicht bis 400, Dibutylenglykol, Polybutylenglykole mit einem Molekulargewicht bis 400, 4,4'-Dihydroxydiphenylpropan, Di-hydroxymethyl-hydrochinon, Ethanolamin, Diethanolamin, Triethanolamin und 3-Aminopropanol.

Die Reaktionskomponenten zur Herstellung der Polyurethane können nach dem an sich bekannten Einstufenverfahren, dem Prepolymerverfahren oder dem Semiprepolymerverfahren zur Umsetzung gebracht werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl Hanser Verlag, München 1966, z.B. auf den Seiten 121 bis 205 beschrieben.

Bevorzugt werden die erfindungsgemäßen modifizierten Polyesterpolyole zur Herstellung von Klebstoffen auf PU Basis eingesetzt, die rasch bei Raumtemperatur abreagieren und keinerlei Umweltbelastung durch eine organische Aminkomponente verursachen. Dabei wird wie folgt verfahren:

Im einfachsten Fall werden die Komponenten diskontinuierlich in einem Rührwerksbehälter nacheinander vermischt, wobei die Polyisocyanatkomponente stets als letzte zugegeben werden muß. Bei hochreaktiven Mischungen mit sehr kurzer Topfzeit ist es angebracht, über ein Fördersystem die Komponenten einem Mischkopf oder einer Mischzone, z.B. in Form eines statischen Mischers, zuzuführen.

Nachstehend sind die in den Beispielen verwendeten Ausgangssubstanzen näher beschrieben und gekennzeichnet.

UPE 1/ungesättigter Polyester 1

Die Herstellung erfolgte durch Umsetzung von 647 g Maleinsäureanhydrid, 503 g Phthalsäureanydrid und 1400 g 1,2-Propylenglykol. Die OH-Zahl betrug 20. Die Iodzahl lag bei 34 (Mercaptananlagerung).

UPE 2 ungesättigter Polyester 2

hergestellt durch Umsetzung von 1480 g Maleinsäureanhydrid, 4440 g Adipinsäure, 2420 g Ethylenglykol und 850 g Diethylenglykol. Die OH-Zahl betrug 15, die Säurezahl 14. Die Iodzahl (Mercaptananlagerung) lag bei 23.

PE 1

ist ein Polyethylenglykoladipat mit einer Funktionalität von 3 einem Hydroxylgehalt von 5,0 % und einer Viskosität nach Brookfield bei 20° = 20 000 mPa.s.

PE 2

ist ein Polybutandioladipat miteinem Hydroxylgehalt von 3,3 % und einer Viskosität nach Brookfield bei 20° = 15 000 mPa.s.

D 1/Polyisocyanat 1

ist ein technisches Gemisch aus Diphenylmethandiisocyanatisomeren mit einem NCO-Gehalt von 30 % und einer Viskosität von 140 mPa.s bei 25°.

Beispiel 1

a) 2000 g ungesättigter Polyester UPE 2 wurden in 2000 ml Methylethylketon gelöst. Unter Stickstoff tropfte man bei 10° eine Lösung von 185,6 g Ethylendiamin in 500 ml Methylethylketon im Verlauf von 2 Stunden zu. Man rührte 10 Stunden bei Raumtemperatur nach und destillierte dann das Lösungsmittel im Vakuum (20 Torr) ab. Das Reaktionsprodukt hat einen Gesamt-Stickstoffgehalt von 3,5 % einem basischen Stickstoffgehalt von 1,6 % und eine Jodzahl von 1. Die Viskosität bei 20° beträgt 43 600 mPa.s und bei 80° 430 mPa.s.

b) Polyurethanherstellung

Das Produkt aus a wurde mit den in der Tabelle 1 angegebenen Mengen Polyesterpolyol PE 1 gemischt und mit D 1 zur Reaktion gebracht. Die Mischung wurde zur Verklebung von 2 x 4 cm großen Platten aus glasfaserverstärktem Polyesterharz (SMC) bzw. Stahl bei 200 mm² Überlappung eingesetzt. Nach einer bzw. 72 Stunden wurde die Scherfestigkeit nach DIN 53 283 bestimmt. Zum Vergleich wurden die unmodifizierten Polyester UPE 1 und UPE 2 mit und ohne Katalysatorzusatz geprüft (Tabelle 1). Während PE 1 und PE 2 sowohl ohne als auch mit Katalysatorzusatz nach einer Stunde noch keine ausreichende Festigkeit bewirken (0 bzw. maximal 0,5 MPa auf SMC), waren die Klebungen aus dem erfindungsgemäßen PU bereits fest (2,8 MPa).

Tabelle 1

| Beispiel | PE 1 | PE 2 | Kat[1] | mod. UPE2 | D1 | Scherfestigkeit[2] | | | |
|---|---|---|---|---|---|---|---|---|---|
| | | | | | | SMC | | Stahl | |
| | | | | | | 1 St. | 72 St. | 1 St. | 72 St. |
| 1α | 33 | – | – | 67 | 40 | 2,8 | 11,8 A | 3,3 | 7,8 |
| 1β | 50 | – | – | 50 | 40 | 0,8 | 12,2 A | 1,3 | 9,5 |
| Vergleich | 100 | – | – | – | 40 | 0 | 10,0 A[3] | 0 | 4,9 |
| " | – | 100 | – | – | 30 | 0 | | 0 | 0,5 |
| " | 100 | – | 1,0 | – | 40 | 0,5 | 10,0 A | 0,7 | 7,8 |
| " | – | 100 | 0,7 | – | 30 | 0,2 | 2,8 | 0,1 | 1,8 |

1) 10-proz. Lösung von Dibutylzinndilaurat (DBTL)
2) DIN 53 283
3) A = Ausriß, Delaminierung des SMC (glasfaserverstärktes Polyesterharz)

## Aminolyse von Mischungen der Polyester

Der ungesättigte Polyester (UPE 1) wurde mit dem gesättigten Polyester (PE 1) im angegebenen Verhältnis gemischt (vgl. Tabelle 2) und unter Stickstoff bei 70° verrührt. Zu der Mischung tropfte man die in der Tabelle 2 angegebene Menge Ethylendiamin (g Amin/100 g PE-Gemisch). Nach der Zugabe rührte man das Reaktionsgemisch noch 2 Stunden bei 70° und destillierte danach bei der gleichen Temperatur nicht umgesetztes Ethylendiamin im Vakuum (20 Torr) ab. Die analytischen Ergebnisse sind in Tabelle 2 zusammengefaßt. Mit ansteigender Aminmenge (bei konstantem Esteverhältnis) werden die OH-Zahlen höher. Ebenfalls ist ein Anstieg de OH-Zahlen bei konstanter Aminmenge, jedoch erhöhtem Polyesterverhältnis, feststellbar. Ferner wird der Gehalt an basischem Stickstoff durch Erhöhung der Aminmenge erhöht. Die Beispiele 14a und 15a geben die Umsetzung von ungesättigtem Polyester (ohne PE 1-Zusatz) mit Ethylendiamin wieder.

Beispiele 2b - 15b

<u>Tabelle 2</u>

| Beispiel | Gew.-Verh. UP1:PE1 | EDA (g/100 g UP1 + PE1) | OH-Zahl | Visk. (Pas, 20°) | % N gesamt | % N basisch | % N berechnet | % EDA[1] | Transparenz |
|---|---|---|---|---|---|---|---|---|---|
| 2a | 1:1 | 4,5 | | fest | 1,99 2,00 | 0,92 0,99 | 2,01 | | klar |
| 3a | 1:1 | 6,0 | 190 | fest | 2,76 2,60 | 1,39 1,30 | 2,64 | | klar |
| 4a | 1:1 | 9,0 | 241 | fest | 3,70 | 1,80 | 3,85 | 0,05 | fast klar |
| 5a | 1:2 | 4,5 | 175 | 180 | 1,71 | 0,85 | 2,01 | 0,02 | fast klar |
| 6a | 1:2 | 9,0 | 258 | | 3,60 | 1,60 | 3,85 | <0,02 | s. trübe |
| 7a | 1:2 | 13,5 | 309 | 89 | 5,02 | 1,91 | 5,55 | 0,15 | s. trübe |
| 8a | 1:3 | 4,5 | 192 | 89 | 1,99 | 0,93 | 2,01 | 0,02 | klar |
| 9a | 1:3 | 9,0 | 267 | 62 | 3,71 | 1,57 | 3,85 | 0,05 | klar |
| 10a | 1:3 | 13,5 | 292 | 71 | | | 5,55 | 0,08 | trübe |
| 11a | 1:5 | 4,5 | 206 | 52 | 2,01 | 0,84 | 2,01 | 0,04 | klar |
| 12a | 1:5 | 9,0 | 275 | 45 | 3,72 | 1,01 | 3,85 | 0,05 | trübe |
| 13a | 1:5 | 13,5 | 331 | 62 | 5,39 | 1,83 | 5,55 | 0,10 | trübe |
| 14a | 1:0 | 6,0 | 118 | fest | 1,15 | 0,53 | 2,64 | | s. trübe |
| 15a | 1:0 | 9,0 | 145 | fest | 1,95 | 0,93 | 3,85 | | s. trübe |

1) EDA = Ethylendiamin

Polyurethanherstellung

Analog Beispiel 1b wurden die nach den Beispielen 2a-15a hergestellten modifizierten Polyesterpolyole mit dem Isocyanat D1 gemischt und auf ihre klebtechnischen Eigenschaften hin geprüft. Die zum Teil festen bzw. hochviskosen gegenüber D1 hochreaktiven Substanzen (Produkt-Nr. 2a -11a) wurden vorher mit dem Polyesterdiol PE1 in dem in der Tabelle 3 angegebenen Gewichtsverhältnis gemischt. In Tabelle 3 sind die Scherfestigkeiten unter verschiedenen Bedingungen zusammengestellt.

## Tabelle 3

| Bei-spiel | Nr. | Produkt Menge (g) | PE1 | (D1) (g) | Topf-zeit (Min.) | Klebungen auf: SMC nach 1 Stde. | nach 24 Std. | 7 Tage $H_2O/60^0$ | Eisen nach 1 Std. | nach 24 Std. |
|---|---|---|---|---|---|---|---|---|---|---|
| 2b | .2a | 5 | 5 | 4 | 15 | 0.9 | 9.1 A[1] | 6.6 | 1.0 | 7.1 |
| 3b | 3a | 5 | 5 | 4 | 12 | 1.2 | 8.3 A | 5.3 | 1.0 | 6.0 |
| 4b | 6a | 5 | 5 | 4 | 10 | 0.9 | 5.3 | 4.6 | 0.8 | 7.6 |
| 5b | 7a | 5 | 5 | 4 | 5 | 1.0 | 6.2 | 5.3 | 0.8 | 4.1 |
| 6b | 8a | 10 | 5 | 6 | 5 | 2.9 | 8.6 A | 4.5 | - | - |
| 7b | 9a | 10 | - | 4 | 2 | 3.5 | 10.5 | 4.4 | 4.8 | 3.1 |
| 8b | 11a | 10 | - | 4 | 4 | 4.2 | 10.9 A | 3.5 | 4.6 | 7.7 |
| 9b | 11a | 10 | 5 | 6 | 12 | 1.0 | 10.0 A | 4.2 | - | - |
| 10b | 12a | 19 | - | 4 | 3 | 3.9 | 9.8 | 1.1 | 4.6 | 4.9 |
| 11b | 13a | 10 | - | 4 | 3 | 2.0 | 6.5 | 0.5 | 3.8 | 4.7 |

1) A = Ausriß, Delaminierung des SMC

0 273 243

Beispiele 16 und 17

a) Zu 200 g Polyester UPE2 in 200 ml Methylethylketon wurden unter Stickstoff bei 10° 16.2 g Ethylendiamin in 50 ml Methylethylketon getropft. Anschließend wurde 10 Stunden bei 25° gerührt. Nach Abdestillieren des Lösungsmittels wurde ein gelbes Harz erhalten (N = 3.3 %; N bas. = 1,51 %), das mit verschiedenen Polyesterpolyolen verdünnt wurde.

b) Analog Beispiel 1b wurden durch Mischen mit Isocyanat D1 Klebungen hergestellt, deren Ergebnisse in Tabelle 4 zusammengestellt sind.

## Tabelle 4

| Beispiel | mod. UPE2 (g) | PE 1 (g) | PE 2 (g) | D 1 (d) | Topfzeit (Min.) | Scherfestigkeit | | | |
|---|---|---|---|---|---|---|---|---|---|
| | | | | | | SMC | | Eisen | |
| | | | | | | 1 Std. | 24 Std. | 1 Std. | 24 Std. |
| 16 | 5 | 5 | – | 4 | 20 | 1.6 | 9.9 A | 1.2 | 7.3 |
| 17 | 5 | – | 5 | 4 | 20 | 1.2 | 8.2 A | 0.9 | 5.8 |

0 273 243

Beispiel 18

a) 400 g UPE1 wurden in 400 ml Ethylacetat gelöst. Unter Stickstoff tropfte man bei 10° eine Lösung von 18.4 g Ethylendiamin in 50 ml Ethylacetat zu, erwärmte auf Raumtemperatur und rührte 3 Stunden nach. Nach Entfernen des Lösungsmittels durch Destillation im Vakuum bei 60° wurde ein viskoses Produkt erhalten: N = 1.93 %, N-bas. = 0,84 % (davon N-sek. 0,70 %), OH-Zahl 53, Iodzahl 22.

b) Nach Abmischung mit dem Polyester PE 2 in Mengen von wurden analog Beispiel 1 Klebungen von SMC-Platten ausgeführt unter Zusatz von 4 g Polyisocyanat D1 je 10 g der Mischung. Die Topfzeit der Mischung betrug 18 Minuten. Die Scherfestigkeit nach 1 Stunde bei Raumtemperatur lag bei 2.2 MPa, nach 24 Stunden bei 8.9 (Delamination).

**Ansprüche**

1. Verfahren zur Herstellung von Amino-und Amidgruppen enthaltenden Polyesterpolyolen durch Umsetzung von Polyesterpolyolen mit Polyaminen, dadurch gekennzeichnet, daß man als Polyesterpolyole ungesättigte Polyesterpolyole gegebenenfalls in Abmischung mit gesättigten Polyestepolyolen und als Polyamine niedermolekulare, aliphatische Polyamine mit zwei primären Aminogruppen einsetzt.

2. Verfahren nach Anspruch 1, dadurch gekennzeichnet, daß man als Polyamine Alkylendiamine, vorzugsweise Ethylen-oder Hexamethylendiamin einsetzt.

3. Verfahren zur Herstellung von Poly(harnstoff)polyurethanen durch Umsetzung von Polyesterpolyolen mit Polyisocyanaten, sowie gegebenenfalls weiteren höhermolekularen Verbindungen mit gegenüber Isocyanaten reaktiven Gruppen und gegebenenfalls niedermolekularen Polyolen als Kettenverlängerungsmittel, gegebenenfalls in Anwesenheit von Katalysatoren und weiteen Zusatzstoffen in an sich bekannter Weise, dadurch gekennzeichnet, daß man als Polyesterpolyolkomponente zumindestens 20 Gew.-% Polyesterpolyole, erhalten nach Anspruch 1 oder 2, einsetzt.

14